# EUROPÄISCHE PATENTANMELDUNG

(11) **EP 1 263 119 A2**
(43) Veröffentlichungstag der Anmeldung: **04.12.2002**
(21) Anmeldenummer: 02010221.6
(22) Anmeldetag: 16.05.2002
(51) Int. Cl.: H02K 11/00

(54) **Antriebsvorrichtung**

(30) Priorität: 25.05.2001 DE 10125581
(71) Anmelder: Webasto Vehicle Systems International GmbH, 82131 Stockdorf (DE)
(72) Erfinder: Meier, Bernhard, 85551 Kirchheim (DE); Kraus, Thomas, 82131 Gauting (DE)
(74) Vertreter: Wiese, Gerhard

(57) **Zusammenfassung**

Bei einer Antriebsvorrichtung, insbesondere zum Verstellen eines Schiebedachs eines Fahrzeugs, mit einem Elektromotor (10), der eine in einem Wellengehäuse (32) angeordnete Polwelle (16) sowie einen auf der Polwelle drehfest angeordneten Magneten (30) aufweist, und mindestens einem außerhalb des Wellengehäuses angeordneten Hall-Sensor (28) zum Erfassen der Drehstellung des Magneten und damit der Polwelle, ist im Bereich des Hall-Sensors (28) die Wand (38) des Wellengehäuses (32) gleichzeitig Teil eines Elektronikgehäuses (34), in welchem eine Platine (26), die Schaltungselemente einer elektronischen Schaltung zum Ansteuern des Elektromotors sowie den mindestens einen Hall-Sensor trägt, so angeordnet ist, dass die mit dem mindestens einen Hall-Sensor bestückte Seite der Platine der Polwelle (16) zugewandt ist und der mindestens eine Hall-Sensor direkt benachbart dem Magneten (30) angeordnet ist.

## Beschreibung

Die vorliegende Erfindung betrifft eine Antriebsvorrichtung, insbesondere zum Verstellen eines Schiebedachs eines Fahrzeugs, mit einem Elektromotor, der eine in einem Wellengehäuse angeordnete Polwelle sowie einen auf der Polwelle drehfest angeordneten Magneten aufweist, und mindestens einem außerhalb des Wellengehäuses angeordneten Hall-Sensor zum Erfassen der Drehstellung des Magneten und damit der Polwelle.

Eine Antriebsvorrichtung der eingangs genannten Art ist in der DE-OS 44 20 692 beschrieben. Hierbei sind ein elektrischer Antriebsmotor und ein mit der Abtriebswelle des Motors gekoppeltes Schneckengetriebe in einem Gehäuse untergebracht. Um die Drehstellung der Abtriebswelle zu erfassen, ist auf der Abtriebswelle ein Magnet drehfest angeordnet und sind außerhalb des Gehäuses, in welchem die Abtriebswelle angeordnet ist, Hall-Sensoren angeordnet, an welchen bei einer Drehbewegung des Magneten Impulse erzeugt werden, um so die Drehstellung des Magneten und damit der Abtriebswelle zu erfassen. Gemäß einer Ausführungsform der DE-OS 44 20 692 werden die Hall-Sensoren in einem eigenen Gehäuse eingekapselt, welches dann auf das Gehäuse der Abtriebswelle aufgesetzt wird. Gemäß einer weiteren Ausführungsform werden die Hall-Sensoren auf einer Trägerplatte angeordnet, die von außen mit dem Gehäuse der Abtriebswelle verbunden wird, so dass in diesem Fall die Trägerplatte und die Hall-Sensoren von außen frei zugänglich und damit ungeschützt angeordnet sind.

In beiden Fällen erfolgt die Ansteuerung des Motors sowie die Auswertung der von den Hall-Sensoren erfassten Impulse in einer von der Antriebsvorrichtung räumlich getrennt angeordneten, in der DE-OS 44 20 692 nicht näher dargestellten Steuereinheit.

In US-Patent 6,162,142 wird eine Antriebsvorrichtung für ein Fahrzeugdach vorgeschlagen, bei welchem die Rotation der Abtriebswelle eines Elektromotors mittels eines Schneckengetriebes abgegriffen wird, welches mittels eines sowohl die Abtriebswelle als auch das Schneckengetriebe umgebenden Gehäuses in Kontakt mit der Abtriebswelle gehalten wird. Das Gehäuse weist ferner einen seitlich versetzt neben dem Schneckengetriebe liegenden Gehäusebereich auf, in welchem eine Platine angeordnet ist, auf welcher Bauelemente zum Ansteuern des Antriebsmotors sowie Hall-Sensoren zum Erfassen der Drehstellung der Abtriebswelle angeordnet sind. Die einzelnen Baugruppen, insbesondere die Abtriebswelle und das von der Abtriebswelle angetriebene Schneckengetriebe, sind nicht gegenüber der Platine abgeschirmt, so dass die Gefahr besteht, dass üblicherweise zwischen der Abtriebswelle und dem Schneckengetriebe vorgesehenes Schmiermittel zu der Platine und den darauf angeordneten Bauelementen hin austreten kann, was zu einer Beeinträchtigung der Funktion dieser Bauteile sowie der Hall-Sensoren führen kann.

Es ist eine Aufgabe der vorliegenden Erfindung, eine Antriebsvorrichtung der eingangs genannten Art zu schaffen, die kompakt aufgebaut ist, bei der nach Möglichkeit Gewicht und Bauraum gegenüber bekannten Vorrichtung eingespart wird und bei der auch über lange Nutzungsdauern hinweg ein zuverlässiger Betrieb der Vorrichtung gewährleistet ist.

Diese Aufgabe wird bei einer Antriebsvorrichtung der eingangs genannten Art dadurch gelöst, dass im Bereich des Hall-Sensors die Wand des Wellengehäuses gleichzeitig Teil eines Elektronikgehäuses ist, in welchem eine Platine, die Schaltungselementen einer elektronischen Schaltung zum Ansteuern des Elektromotors sowie den mindestens einen Hall-Sensor trägt, so angeordnet ist, dass die mit dem mindestens einen Hall-Sensor bestückte Seite der Platine der Polwelle zugewandt ist und der mindestens eine Hall-Sensor direkt benachbart dem Magneten angeordnet ist. Auf diese Weise wird einerseits eine kompakte und in sich geschlossene Antriebsvorrichtung bereitgestellt, für die keine separate Ansteuerungselektronik vorgesehen werden muss, sondern vielmehr die Ansteuerungselektronik direkt in der Antriebsvorrichtung enthalten ist, und bei der dennoch gewährleistet ist, dass aus dem mechanischen Teil der Antriebsvorrichtung, insbesondere von der Polwelle, kein Schmiermittel in den elektronischen Teil der Antriebsvorrichtung gelangen kann und damit den Betrieb der elektronischen Schaltung zum Ansteuern des Elektromotors beeinträchtigt. Ferner wird bei der hier vorgeschlagenen Antriebsvorrichtung durch Nutzung der Wand zwischen der Polwelle und den Hall-Sensoren einerseits als Wand des Wellengehäuses und andererseits als Wand des Elektronikgehäuses sowohl das Gewicht niedrig gehalten als auch die Materialmenge, die das Magnetfeld des auf der Polwelle sitzenden Magneten durchdringen muss, um zu dem mindestens einen Hall-Sensor zu gelangen.

Weitere bevorzugte Ausgestaltungen der Erfindung ergeben sich aus den Unteransprüchen.

Insbesondere kann die Wand des Wellengehäuses im Bereich des mindestens einen Hall-Sensors eine geringere Wandstärke als der Rest des Wellengehäuses aufweisen, wobei hierfür die Wand eine ein Fenster mit geringer Wandstärke bildende Ausnehmung aufweisen kann. Auf diese Weise lässt sich einerseits der mindestens eine Hall-Sensor näher an dem auf der Polwelle sitzenden Magneten plazieren und muss andererseits das von diesem Magneten ausgehende Magnetfeld weniger Material durchdringen, um zu dem Hall-Sensor zu gelangen.

Sind zwei oder mehr Hall-Sensoren vorgesehen, so weist die Wand des Wellengehäuses vorzugsweise im Bereich der Hall-Sensoren für jeden der Hall-Sensoren eine ein Fenster mit geringer Wandstärke bildende Ausnehmung auf. Die zwischen derartigen Fenstern verbleibenden Stege, in welchen die Wandstärke nicht reduziert wurde, tragen zur Stabilität des Gehäuses bei.

Vorzugsweise ist das Elektronikgehäuse mindestens Teil eines Getriebegehäuses, in welchem ein von der Polwelle angetriebenes, ein Schneckenrad aufweisendes Schneckengetriebe sitzt. Auf diese Weise lässt sich ein Schneckengetriebe, wie es beispielsweise eingesetzt wird, wenn die erfindungsgemäße Antriebsvorrichtung zum Verstellen eines Schiebedachs eines Fahrzeugs genutzt wird, in vorteilhafter Weise in die Antriebsvorrichtung integrieren.

Eine äußerst kompakte Antriebsvorrichtung lässt sich hierbei dadurch verwirklichen, dass die Platine, welche Schaltungselemente der elektronischen Schaltung zum Ansteuern des Elektromotors sowie den mindestens einen Hall-Sensor trägt, nicht wie es bisher im Stand der Technik vorgeschlagen wurde, neben dem Schneckengetriebe angeordnet wird, sondern das Schneckenrad zumindest teilweise, vorzugsweise vollständig, übergreift.

Um einen Austritt von Schmiermitteln aus dem Schneckengetriebe und somit eine mögliche Verschmutzung der Platine sowie das Risiko einer Fehlfunktion der auf der Platine angeordneten Bauelemente durch derartige Schmiermittel auszuschließen, umschließt ferner das Getriebegehäuse vorzugsweise vollständig das Schneckenrad und dichtet dieses gegenüber der Platine ab.

Das Elektronikgehäuse weist vorzugsweise ein das Wellengehäuse einschließendes Unterteil sowie einen mit dem Unterteil zusammenwirkenden Deckel auf. Hierbei kann das Unterteil des Elektronikgehäuses ferner das Unterteil eines Getriebegehäuses bilden, in welchem ein von der Polwelle angetriebenes, ein Schneckenrad aufweisendes Schneckengetriebe sitzt. Ähnlich wie bei der teilweisen Integration des Wellengehäuses in das Elektronikgehäuse wird durch diese (Teil-) Integration des Getriebegehäuses in das Elektronikgehäuse zum Einen eine äußerst kompakte Antriebsvorrichtung erhalten, bei welcher zum Anderen durch die gegenseitige Integration der einzelnen Gehäuseabschnitte nicht nur Material und damit Gewicht eingespart, sondern gleichzeitig auch die Stabilität der gesamten Vorrichtung erhöht wird, insbesondere wenn es sich bei dem Unterteil sowie dem Deckel des Elektronikgehäuses um jeweils einstückige Formbauteile handelt, bei welchen dann die Unterteilungswände zwischen den einzelnen Gehäuseabschnitten, d.h. dem die Platine aufnehmenden Elektronikgehäuse, dem Wellengehäuse und dem Getriebegehäuse, gleichzeitig als Verstärkungen der gesamten Anordnung dienen.

Das Gewicht der genannten Antriebsvorrichtung lässt sich weiter reduzieren, wenn das Wellengehäuse und das Elektronikgehäuse nicht wie in bekannter Weise als Metalldruckgussbauteile ausgeführt sind, sondern aus Kunststoff gefertigt sind.

In weiterer Ausgestaltung der Erfindung weist das Elektronikgehäuse vorzugsweise hülsenförmige Durchführungen für Befestigungsmittel, wie beispielsweise Schrauben, auf, um die Antriebsvorrichtung benachbart einer anzutreibenden Vorrichtung zu befestigen, beispielsweise einer mit einem drucksteifen Antriebskabel zum Verfahren eines beweglichen Deckelelements eines Fahrzeugdaches verbundenen Schneckenwelle. Hierbei werden die Durchführungen vorzugsweise jeweils entlang einer Seitenwand des Elektronikgehäuses angeordnet, so dass ein Teil der Wandung der Durchführung gleichzeitig Teil der Seitenwand sein kann, wodurch einerseits für eine möglichst stabile Verbindung der Durchführungen mit dem Gehäuse und andererseits für einen reduzierten Material- und damit Gewichtsaufwand gesorgt wird.

Vorzugsweise ist mindestens eine der Durchführungen innerhalb des Außenumfangs des Elektronikgehäuses angeordnet und bildet einen Teil der Seitenwand des Elektronikgehäuses, wodurch sich die Verwindungssteifigkeit der Durchführung gegenüber dem Gehäuse noch weiter steigern lässt.

Ist das Elektronikgehäuse aus Kunststoff gefertigt, so werden vorzugsweise metallische Verstärkungshülsen in den Durchführungen vorgesehen. Hierbei lässt sich eine Kompressionsbeanspruchung der Durchführungen in Richtung der Durchführung beim Anziehen der durch die Durchführungen durchgesteckten Befestigungsmittel verhindern, wenn die Länge der in den Durchführungen vorgesehenen metallischen Verstärkungshülsen der Länge der Durchführungen entspricht.

In weiterer Ausgestaltung der Erfindung weist das Elektronikgehäuse zur Verbesserung der Stabilität ferner Verstärkungsrippen auf.

Falls das Unterteil des Getriebegehäuses gleichzeitig das Unterteil des Getriebegehäuses bildet, in welchem ferner eine Durchtrittsöffnung für eine Abtriebswelle des Schneckengetriebes vorgesehen ist, werden vorzugsweise Verstärkungsrippe vorgesehen, die radial zu dieser Durchtrittsöffnung verlaufen. Nachdem auf die Antriebseinrichtung einwirkende Kräfte bzw. Gegenkräfte über die Antriebsverbindung zwischen der Antriebsvorrichtung und der anzutreibenden Vorrichtung eingetragen werden, werden durch solche Verstärkungsrippen die auf die Antriebsvorrichtung und damit auf das die Antriebsvorrichtung umgebende Gehäuse wirkenden Kräfte am besten aufgenommen. Als besonders zweckmäßig erweist es sich hierbei, Verstärkungsrippen vorzusehen, die sich von der Durchtrittsöffnung für die Abtriebswelle des Schneckengetriebes (und damit vom Ort des Krafteintrags) zu den Durchführungen, an welchen die Antriebsvorrichtung, z.B. fahrzeugfest, befestigt ist, hin (und damit zum Ort der Kraftausleitung) erstrecken.

Ein bevorzugtes Ausführungsbeispiel der vorliegend vorgeschlagenen Antriebsvorrichtung wird nachstehend unter Bezugnahme auf die beigefügten Zeichnungen detailliert erläutert. Es zeigen:
- FIG. 1: eine schematische, auseinandergezogene perspektivische Ansicht einer erfindungsgemäßen Antriebsvorrichtung von schräg oben;
- FIG. 2: eine schematische, auseinandergezogene perspektivische Ansicht der Vorrichtung aus FIG. 1 von schräg unten;
- FIG. 3: eine schematische, perspektivische Ansicht des in FIG. 1 dargestellten Unterteils; und
- FIG. 4: eine schematische, perspektivische Ansicht der Antriebsvorrichtung nach den Figuren 1 bis 3, bei welcher der Antriebsmotor mitsamt der Polwelle aus dem Wellengehäuse herausgezogen ist.

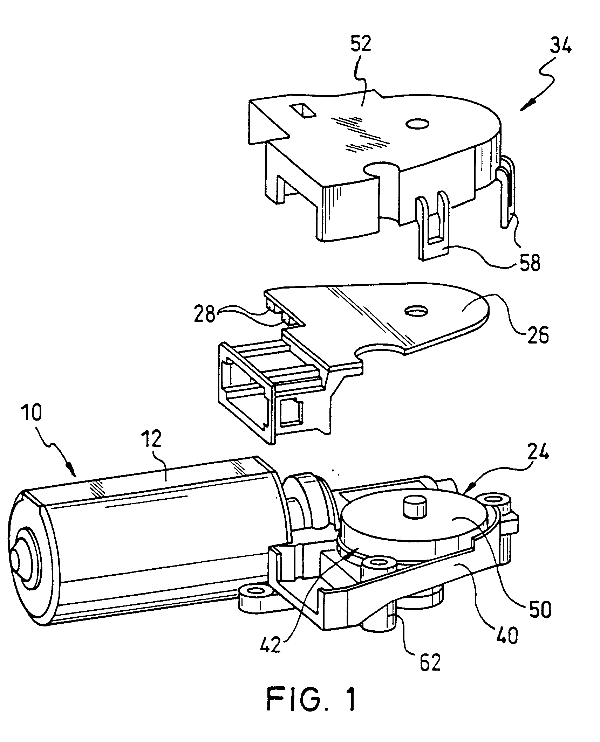

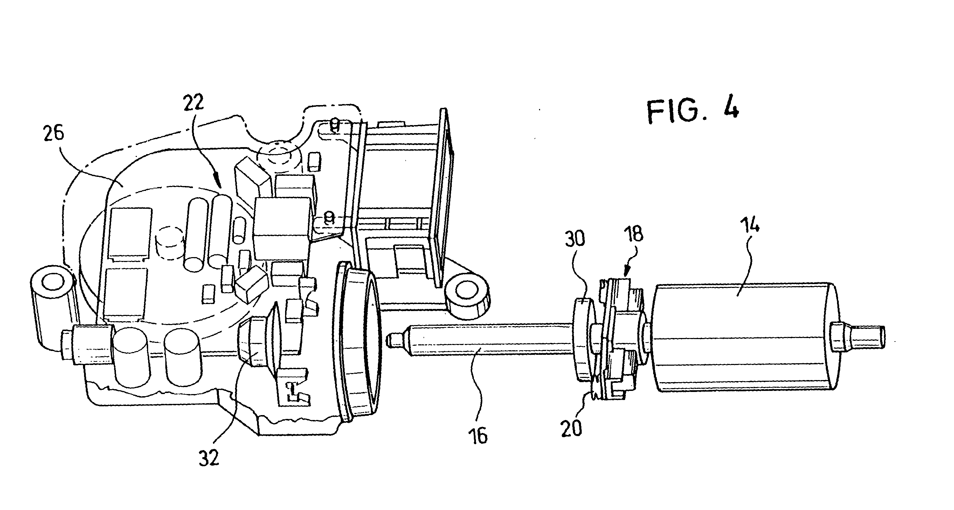

Die in den Figuren 1 bis 4 dargestellte Antriebsvorrichtung weist einen allgemein mit 10 bezeichneten Elektromotor auf, der einen von einem Poltopf 12 (siehe FIG. 1) umgebenen Anker 14 (siehe FIG. 4), eine Motor- bzw. Polwelle 16 sowie ein Bürstensystem 18 aufweist, welches über eine Kontaktierung 20 mit einer allgemein mit 22 bezeichneten elektronischen Schaltung zum Ansteuern des Motors versehen ist. Die Motorwelle 16 trägt in ihrem vorderen Bereich eine (nicht dargestellte) Schneckenwelle, welche mit einem Schneckenrad 24 kämmt. Der Begriff "trägt" soll hierbei sowohl eine als separates Bauteil ausgebildete Schneckenwelle als auch eine einstückig mit der Motorwelle 16 ausgebildete Schneckenwelle umfassen. Das so gebildete Untersetzungsgetriebe dient zum Antrieb eines verstellbaren Bauteils, insbesondere eines Deckelelements eines öffnungsfähigen Fahrzeugdaches, beispielsweise dem Deckel eines Schiebe- oder Schiebehebedaches oder eine Lamelle eines Lamellendaches.

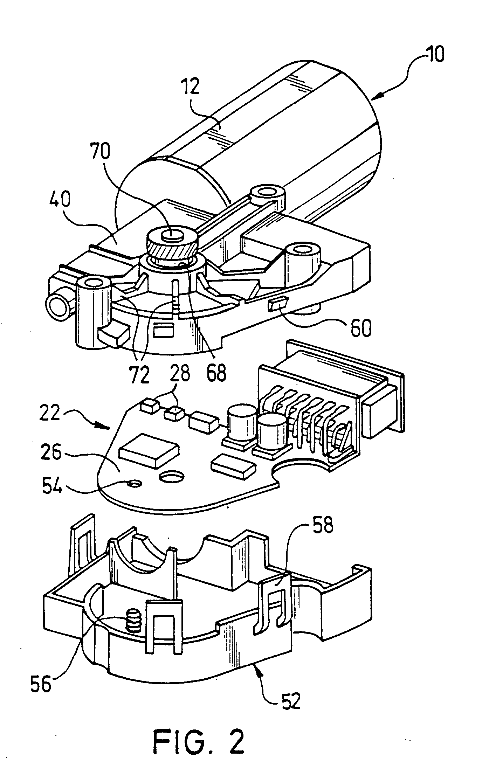

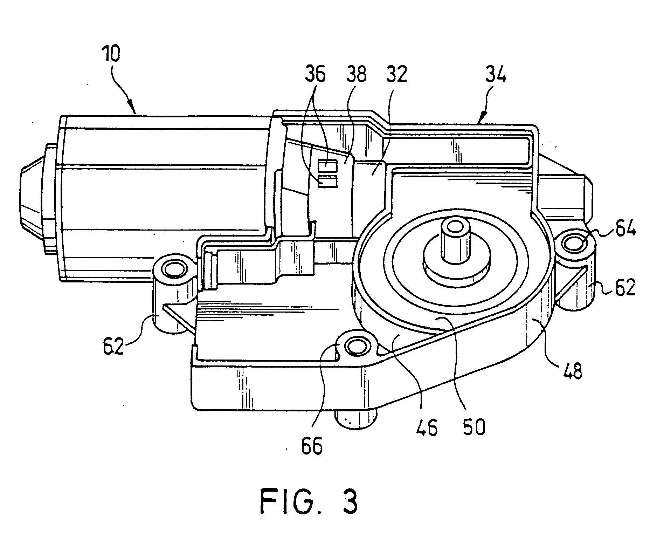

Die Ansteuerungselektronik 22 für den Motor 10 ist auf einer Leiterplatte oder Platine 26 untergebracht, die, wie es in den Figuren 1 und 2 dargestellt ist, sich über das Schneckenrad hinweg erstreckt. Auf der Platine 26 sind ferner zwei Hall-Sensoren 28 angeordnet, um durch Erfassen des von einem auf der Polwelle 16 angeordneten Magnetrad 30 ausgehenden Magnetfelds die Drehstellung des Magneten und damit der Polwelle zu erfassen. Um den Bauraum der elektronischen Schaltung zum Ansteuern des Motors 10 möglichst gering zu halten, ist die Platine 26 vorzugsweise beidseitig mit Bauelementen, insbesondere SMD-Bauteilen, bestückt. Hierbei versteht es sich jedoch, dass die Hall-Sensoren 28 auf der der Polwelle 16 zugewandten Seite der Platine 26 angeordnet werden. Wie insbesondere aus den Figuren 3 und 4 hervorgeht, ist die Polwelle 16 im fertig montierten Zustand der Antriebsvorrichtung innerhalb eines Wellengehäuses 32 angeordnet, dessen in FIG. 3 nach oben weisende Seite gleichzeitig Teil der Unterseite des die Elektronik 22 aufnehmenden, mit 34 bezeichneten Elektronikgehäuses ist, und das vorzugsweise aus Kunststoff gefertigt ist. Wie insbesondere der FIG. 3 zu entnehmen ist, ist die Polwelle 16 derart von dem Wellengehäuse 32 umschlossen, dass zwischen dem Wellengehäuse 32 und dem Elektronikgehäuse 34 keine Verbindungsöffnung besteht, durch die beispielsweise ein Schmiermittel der Polwelle 16 zu der Platine 26 hin austreten könnte. Die das Wellengehäuse 32 und das Elektronikgehäuse 34 verbindende Wand 38 weist ferner im Bereich der Hall-Sensoren 28 Ausnehmungen auf, die für jeden der Hall-Sensoren 28 jeweils ein Fenster 36 mit geringerer Wandstärke bilden.

Unter erneuter Bezugnahme auf die Figuren 1 und 2 bildet das Elektronikgehäuse 34, und zwar insbesondere das mit dem Motor 10 verbundene Unterteil 40, gleichzeitig das Unterteil eines Getriebegehäuses 42, in welchem das mit der Polwelle 16 kämmende Schneckenrad 24 untergebracht ist. Vorzugsweise weist zu diesem Zweck das Elektronikgehäuse 34 eine das Schneckenrad 24 umgebende Wandung 46 auf, wobei das somit von der Unterseite des Elektronikgehäuses 34, der Wandung 46 und einem Teil der Seitenwand 48 des Elektronikgehäuses 34 gebildete Unterteil des Getriebegehäuses mittels eines Deckels 50 gegenüber dem verbleibenden Innenraum des Elektronikgehäuses 34 verschlossen wird. Durch die hier vorgeschlagene Unterteilung des Elektronikgehäuses 34 in mehrere, in sich geschlossene Gehäuseabschnitte, ergibt sich eine äußerst kompakte Ausgestaltung der Antriebsvorrichtung, in welcher alle zum Verstellen einer anzutreibenden Vorrichtung erforderlichen Komponenten untergebracht sind, in welcher jedoch die einzelnen Baugruppen räumlich voneinander getrennt angeordnet sind, und insbesondere der die Polwelle und das Getriebe umfassende mechanische Teil der Antriebsvorrichtung von dem die elektronische Schaltung umfassenden elektrischen Teil der Antriebsvorrichtung dichtend getrennt ist, so dass aus dem mechanischen Teil keine Schmiermittel in den elektrischen Teil gelangen können, was zu einer temporären oder gar dauerhaften Beeinträchtigung der Funktion elektrischer oder elektronischer Komponenten führen könnte.

Zur Erleichterung der Montage der Antriebsvorrichtung ist der Deckel 52 des Elektronikgehäuses 34 vorzugsweise so ausgestaltet, dass die Platine 26 in den Deckel eingelegt und dort verrastet werden kann. Zu diesem Zweck kann, wie es in FIG. 2 dargestellt ist, die Platine 26 beispielsweise Durchbrüche 54 aufweisen, durch die sich beim Einsetzen der Platine 26 in den Deckel 52 an dem Deckel vorgesehene Rastvorsprünge 56 hindurch erstrecken, welche die Platine in dem Deckel zu verrasten. Zur Befestigung des Deckels 52 an dem Gehäuseunterteil 40 sind ebenfalls vorzugsweise Rastverbinder vorgesehen. Beispielsweise können, wie es in den Figuren 1 und 2 gezeigt ist, Clips-Elemente 58 vorgesehen sein, die in entsprechende an dem Unterteil 40 ausgebildete Rastvorsprünge 60 einrasten, wenn der Deckel 52 auf das Unterteil 40 aufgesetzt wird. Zur Befestigung der Antriebsvorrichtung beispielsweise in einem Fahrzeug sind an dem Elektronikgehäuse 34 Durchführungen 62 vorgesehen, durch die (nicht dargestellte) Befestigungsmittel, z.B. Gewindeschrauben, hindurchgesteckt werden können, um die Antriebsvorrichtung ortsfest zu befestigen. Wie in FIG. 3 zu sehen ist, sind in den Durchführungen 62 metallische Verstärkungshülsen 64 vorgesehen, deren Länge auf die Länge der Durchführungen abgestimmt ist, um eine Kompressionsbeanspruchung des die Durchführungen bildenden Werkstoffes beim Anziehen der Befestigungsschrauben zu verhindern. Die Durchführungen 62 sind alle entlang dem Außenumfang des Elektronikgehäuses 34 angeordnet und sind in den Seitenrand 38 desselben integriert. Um die Festigkeit des Gehäuses und insbesondere der Befestigungspunkte des Gehäuses noch weiter zu erhöhen, kann mindestens eine der Durchführungen 62 innerhalb des Außenumrisses des Elektronikgehäuses angeordnet sein, wie dies bei 66 in FIG. 3 angedeutet ist.

Wie in FIG. 2 zu sehen ist, sind ferner an der Unterseite des Unterteils 40 des Elektronikgehäuses 34, an der eine Durchtrittsöffnung 68 für die Abtriebswelle 70 des Schneckengetriebes vorgesehen ist, Verstärkungsrippen 72 vorgesehen, die vorzugsweise radial zu der Durchtrittsöffnung 68 verlaufen. Um auf das Elektronikgehäuse einwirkenden Scherkräften besser zu widerstehen, die auftreten, wenn über die Abtriebswelle 70 Kräfte auf die Antriebsvorrichtung, die sich wiederum an den Durchführungen 62 beispielsweise gegen einen festen Fahrzeugdachrahmen abstützt, einwirken, sind zwischen der Durchtrittsöffnung 68 und den einzelnen Durchführungen 62 Verstärkungsrippen 72 vorgesehen.

Wie sich aus der vorstehenden Beschreibung ergibt, stellt die hier vorgeschlagene Antriebsvorrichtung einer äußerst kompakte und in sich geschlossene Vorrichtung dar. Unter Zuhilfenahme der hier erläuterten Maßnahmen kann das Elektronikgehäuse, in welches vorzugsweise das Wellengehäuse und das Getriebegehäuse mindestens teilweise integriert werden, aus Kunststoff gefertigt werden, so dass sich nicht nur der zum Unterbringen der Antriebsvorrichtung benötigte Bauraum sondern auch das Gesamtgewicht der Antriebsvorrichtung ohne Stabilitätseinbussen reduzieren lässt.

### Bezugszeichenliste

- 10: Elektromotor
- 12: Poltopf 12
- 14: Anker
- 16: Polwelle
- 18: Bürstensystem
- 20: Kontaktierung
- 22: Ansteuerungselektronik
- 24: Schneckenrad
- 26: Platine
- 28: Hall-Sensoren
- 30: Magnetrad
- 32: Wellengehäuse
- 34: Elektronikgehäuse
- 36: Fenster für 28
- 38: Wand zwischen 32 und 34
- 40: Unterteil von 34
- 42: Getriebegehäuse
- 44: Deckel von 42
- 46: Wandung von 42
- 48: Seitenwand von 34
- 50: Deckel von 42
- 52: Deckel
- 54: Durchbruch in 34
- 56: Rastvorsprung
- 58: Clipselement
- 60: Rastvorsprung
- 62: Durchführung
- 64: Verstärkungshülse
- 66: innen liegende Durchführung
- 68: Durchtrittsöffnung für70
- 70: Abtriebswelle
- 72: Verstärkungsrippen

## Patentansprüche

1. Antriebsvorrichtung, insbesondere zum Verstellen eines Schiebedachs eines Fahrzeugs, mit einem Elektromotor (10), der eine in einem Wellengehäuse (32) angeordnete Polwelle (16) sowie einen auf der Polwelle drehfest angeordneten Magneten (30) aufweist, und mindestens einem außerhalb des Wellengehäuses angeordneten Hall-Sensor (28) zum Erfassen der Drehstellung des Magneten und damit der Polwelle, **dadurch gekennzeichnet, dass** im Bereich des Hall-Sensors (28) die Wand (38) des Wellengehäuses (32) gleichzeitig Teil eines Elektronikgehäuses (34) ist, in welchem eine Platine (26), die Schaltungselemente einer elektronischen Schaltung zum Ansteuern des Elektromotors sowie den mindestens einen Hall-Sensor trägt, so angeordnet ist, dass die mit dem mindestens einen Hall-Sensor bestückte Seite der Platine der Polwelle (16) zugewandt ist und der mindestens eine Hall-Sensor direkt benachbart dem Magneten (30) angeordnet ist.

2. Antriebsvorrichtung nach Anspruch 1, **dadurch gekennzeichnet, dass** die Wand (38) des Wellengehäuses (32) im Bereich des mindestens einen Hall-Sensors (28) eine geringere Wandstärke als der Rest des Wellengehäuses aufweist.

3. Antriebsvorrichtung nach Anspruch 2, **dadurch gekennzeichnet, dass** die Wand (38) des Wellengehäuses (32) im Bereich des mindestens einen Hall-Sensors (28) eine ein Fenster (36) mit geringer Wandstärke bildende Ausnehmung aufweist.

4. Antriebsvorrichtung nach Anspruch 3, **dadurch gekennzeichnet, dass** mindestens zwei Hall-Sensoren (28) vorgesehen sind und die Wand (38) des Wellengehäuses (32) im Bereich der Hall-Sensoren für jeden der Hall-Sensoren eine ein Fenster (36) mit geringer Wandstärke bildende Ausnehmung aufweist.

5. Antriebsvorrichtung nach einem der vorhergehenden Ansprüche, **dadurch gekennzeichnet, dass** das Elektronikgehäuse (34) mindestens Teil eines Getriebegehäuses (42) ist, in welchem ein von der Polwelle (16) angetriebenes, ein Schneckenrad (24) aufweisendes Schneckengetriebe sitzt.

6. Antriebsvorrichtung nach Anspruch 5, **dadurch gekennzeichnet, dass** die Platine (26) das Schneckenrad (24) zumindest teilweise übergreift.

7. Antriebsvorrichtung nach Anspruch 6, **dadurch gekennzeichnet, dass** das Getriebegehäuse (42) das Schneckenrad (24) vollständig umschließt und gegenüber der Platine (26) abdichtet.

8. Antriebsvorrichtung nach einem der vorhergehenden Ansprüche, **dadurch gekennzeichnet, dass** das Elektronikgehäuse (34) ein das Wellengehäuse (32) einschließendes Unterteil (40) sowie einen mit dem Unterteil zusammenwirkenden Deckel (52) aufweist.

9. Antriebsvorrichtung nach Anspruch 8, **dadurch gekennzeichnet, dass** das Unterteil (40) des Elektronikgehäuses (34) ferner das Unterteil eines Getriebegehäuses (42) bildet, in welchem ein von der Polwelle (16) angetriebenes, ein Schneckenrad (24) aufweisendes Schneckengetriebe sitzt.

10. Antriebsvorrichtung nach einem der Ansprüche 8 oder 9, **dadurch gekennzeichnet, dass** der Deckel (52) Mittel (56) zum Verrasten der Platine (26) aufweist.

11. Antriebsvorrichtung nach einem der vorhergehenden Ansprüche, **dadurch gekennzeichnet, dass** das Wellengehäuse (32) und das Elektronikgehäuse (34) aus Kunststoff gefertigt sind.

12. Antriebsvorrichtung nach Anspruch 7, **dadurch gekennzeichnet, dass** das Getriebegehäuse (42) einen innerhalb des Elektronikgehäuses (34) angeordneten Deckel (50) zum Verschließen des Getriebegehäuses aufweist.

13. Antriebsvorrichtung nach einem der vorhergehenden Ansprüche, **dadurch gekennzeichnet, dass** das Elektronikgehäuse (34) hülsenförmige Durchführungen (62) für Befestigungsmittel aufweist, um die Antriebsvorrichtung benachbart einer anzutreibenden Vorrichtung zu befestigen.

14. Antriebsvorrichtung nach Anspruch 13, **dadurch gekennzeichnet, dass** die Durchführungen (62) jeweils entlang einer Seitenwand (48) des Elektronikgehäuses (34) angeordnet sind.

15. Antriebsvorrichtung nach Anspruch 14, **dadurch gekennzeichnet, dass** mindestens eine der Durchführungen (62) innerhalb des Außenumfangs des Elektronikgehäuses (34) angeordnet ist und einen Teil der Seitenwand (48) des Elektronikgehäuses bildet.

16. Antriebsvorrichtung nach einem der Ansprüche 13 bis 15, **dadurch gekennzeichnet, dass** das Elektronikgehäuse (34) aus Kunststoff gefertigt ist und in den Durchführungen (62) metallische Verstärkungshülsen (64) vorgesehen sind.

17. Antriebsvorrichtung nach einem der vorhergehenden Ansprüche, **dadurch gekennzeichnet, dass** das Elektronikgehäuse (34) Verstärkungsrippen (72) aufweist.

18. Antriebsvorrichtung nach den Ansprüchen 9 und 17, **dadurch gekennzeichnet, dass** in dem Unterteil des Getriebegehäuses (42) eine Durchtrittsöffnung (68) für eine Abtriebswelle (70) des Schneckengetriebes vorgesehen ist und Verstärkungsrippen (72) vorgesehen sind, die radial zu der Durchtrittsöffnung verlaufen.

19. Antriebsvorrichtung nach Anspruch 18 oder den Ansprüchen 9 und 17 sowie einem der Ansprüche 13 bis 16, **dadurch gekennzeichnet, dass** in dem Unterteil des Getriebegehäuses (42) eine Durchtrittsöffnung (68) für eine Abtriebswelle (70) des Schneckengetriebes vorgesehen ist und sich mindestens einer der Verstärkungsrippen (72) von der Durchtrittsöffnung zu einer der Durchführungen (62) hin erstreckt.
